# NEUE EUROPÄISCHE PATENTSCHRIFT

(11) **EP 3 150 037 B2**
(45) Veröffentlichungstag und Bekanntmachung des Hinweises auf die Entscheidung über den Einspruch: **22.04.2026**
(45) Hinweis auf die Patenterteilung: 11.11.2020
(21) Anmeldenummer: 16177694.3
(22) Anmeldetag: 04.07.2016
(51) Int. Cl.: A01B 79/00

(54) **VERFAHREN UND UNTERSTÜTZUNGSSYSTEM ZUR SENSORGESTÜTZTEN BEWIRTSCHAFTUNG EINER LANDWIRTSCHAFTLICHEN FLÄCHE**
METHOD AND SYSTEM FOR SENSOR-SUPPORTED MANAGEMENT OF AN AGRICULTURAL FIELD
PROCEDE ET SYSTÈME DE GESTION D'UN TERRAIN AGRICOLE UTILISANT DES CAPTEURS

(30) Priorität: 02.10.2015 DE 102015116736
(43) Veröffentlichungstag der Anmeldung: 05.04.2017
(73) Patentinhaber: CLAAS Selbstfahrende Erntemaschinen GmbH, 33428 Harsewinkel (DE)
(72) Erfinder: Heitmann, Christoph, 48231 Warendorf (DE); Vieregge, Christopher, 32694 Dörentrup (DE)
(74) Vertreter: Pellengahr, Maximilian Rudolf

(56) Entgegenhaltungen:
- EP-A1- 1 754 405
- DE-A1- 102010 038 661
- DE-A1- 102010 046 479
- DE-A1- 102010 046 479
- DE-A1- 102014 201 203
- DE-A1- 102014 201 203
- DE-B3- 102013 019 098
- US-A1- 2014 303 814

## Beschreibung

Die Erfindung betrifft ein Verfahren zur sensorgestützten Bewirtschaftung einer landwirtschaftlich genutzten Fläche mittels eines mobilen Sensorsystems nach Anspruch 1 und ein Unterstützungssystem zur sensorgestützten Bewirtschaftung einer landwirtschaftlich genutzten Fläche gemäß Anspruch 11.

Aus dem Stand der Technik ist es bekannt, Fluggeräte, insbesondere Drohnen, als mobile Sensorsysteme zur Durchführung von Messaufgaben einzusetzen, um nachfolgende Arbeitsschritte besser planen zu können. Auch die Kooperation der Fluggeräte mit landwirtschaftlichen Arbeitsmaschinen ist beschrieben, um die Bewirtschaftung der landwirtschaftlichen Nutzfläche zu optimieren.

In der DE 10 2013 019 098 B3 ist ein Fluggerät beschrieben, dass wahlweise unterschiedliche Funktionseinheiten tragen kann. Eine Funktionseinheit kann beispielsweise eine Kamera oder ein Werkzeug sein. Das Fluggerät kann je nach Funktionseinheit damit eine Messaufgabe durchführen.

Bei dem in der DE 10 2014 201 203 A1 beschriebenen Fluggerät kann dessen Sensorik im Hinblick auf eine durchzuführende Messaufgabe gewechselt werden. Bedient wird das Fluggerät durch eine in einem Arbeitsfahrzeug angeordnete Kontrolleinheit mit einer Bedienschnittstelle, mit einer Anzeigeeinrichtung und Eingabemitteln für den Bediener. Zur Steuerung des Fluggeräts wird auch auf die DE 10 2010 038 661 A1 verwiesen.

In der DE 10 2010 038 661 A1 ist ein Fluggerät beschrieben, dass von einer Steuereinrichtung in einer konstanten Höhe oberhalb der Erntemaschine und in seitlicher Richtung zwischen Erntemaschine und Transportfahrzeug gehalten wird und den Pflanzenbestand vor der Erntemaschine und den Überladevorgang von Erntegut von der Erntemaschine auf einen Anhänger erfasst. DE 10 2010 046 479 A1 offenbart ein weiteres Beispiels eines Verfahrens zur Erfassung von Daten mittels Befliegung durch ein unbemanntes Kleinfluggerät.

Damit ist es aus dem Stand der Technik bekannt, als Fluggeräte ausgestaltete mobile Sensorsysteme für verschiedene landwirtschaftliche Aufgaben einzusetzen.

Nachteilig hieran ist, dass die Sensorsysteme in Abhängigkeit vom jeweiligen Anwendungsfall und/oder Durchführungsort der Messaufgabe konfiguriert und gegebenenfalls auch gesteuert werden müssen. Dies erfordert eine hohe Konzentration für den Bediener und stellt insofern eine Belastung für diesen dar, insbesondere, wenn er gleichzeitig eine kooperierende Arbeitsmaschine bedienen muss.

Die Aufgabe der vorliegenden Erfindung ist es, die sensorgestützte Bewirtschaftung einer landwirtschaftlich genutzten Fläche mittels eines mobilen Sensorsystems während eines Vegetationszyklus, insbesondere für unterschiedliche Anwendungsfälle, zu vereinfachen. Diese Aufgabe wird verfahrensmäßig durch ein Verfahren mit den Merkmalen von Anspruch 1 gelöst.

Dadurch, dass in einer Speichereinheit Anwendungsdaten abgelegt und die Anwendungsdaten landwirtschaftlichen Anwendungsfällen zugeordnet sind, kann ein landwirtschaftlicher Anwendungsfall für das mobile Sensorsystem ganz einfach gewählt werden. Daraufhin kann die Planungseinheit auf der Basis von Informationen aus den Anwendungsdaten und ggf. zusätzlichen Informationen von einem Bediener und/oder einer Arbeitsmaschine für den gewählten Anwendungsfall einen Dienstdatensatz erzeugen.

Die zusätzlichen Informationen können beispielsweise ein Durchführungsort für eine Messaufgabe und/oder die Art der Frucht auf der landwirtschaftlichen Fläche eines Durchführungsortes sein.

Der von der Planungseinheit für den gewählten Anwendungsfall erzeugte Dienstdatensatz dient der Steuerung und/oder Konfiguration des mobilen Sensorsystems zur Durchführung der Messaufgabe.

Hierdurch wird die Bedienung des mobilen Sensorsystems erheblich vereinfacht. Es kann auf einfache Art und Weise eine landwirtschaftlich genutzte Fläche mittels eines mobilen Sensorsystems während des Vegetationszyklus bewirtschaftet werden, da die Messaufgabe auch von einfachem, angelernten Personal ausgeführt werden kann bzw. die Bedienung des Sensorsystems dem Bediener einer Arbeitsmaschine durch die Erzeugung des Dienstdatensatzes auch beim Wechsel der Messaufgabe weitestgehend abgenommen wird.

Der abhängige Anspruch 2 beschreibt die Informationen, welche bevorzugt in den Anwendungsdaten abgelegt sind und vorzugsweise zur Erzeugung des Dienstdatensatzes verwendet werden.

Um die Bedienung des Sensorsystems weiter zu erleichtern, können vorzugsweise, wie im abhängigen Anspruch 3 beschrieben, der Dienstdatensatz und/oder Teildienstdaten des Dienstdatensatzes an das Sensorsystem übertragen oder diesem bereitgestellt werden.

Wie vorzugsweise mit dem mobilen Sensorsystem eine oder mehrere Messaufgaben durchgeführt werden können, ist in den Ansprüchen 4 bis 6 beschrieben.

Die Ansprüche 7 bis 10 befassen sich damit, wie gemäß eines bevorzugten Verfahrens die erfassten Messdaten genutzt werden können, um die sensorgestützte Bewirtschaftung der landwirtschaftlich genutzten Fläche zu optimieren und zu vereinfachen.

Darüber hinaus wird die oben beschriebene Aufgabe durch ein Unterstützungssystems zur sensorgestützten Bewirtschaftung einer landwirtschaftlich genutzten Fläche mit den Merkmalen von Anspruch 11 gelöst. Es ergeben sich die gleichen Vorteile wie in Verbindung mit dem Verfahren zur sensorgestützten Bewirtschaftung einer landwirtschaftlich genutzten Fläche beschrieben.

Das Unterstützungssystem ist dazu ausgebildet, das vorgeschlagene Verfahren zu verwenden. Das Verfahren kann mit dem vorschlagsgemäßen Unterstützungssystem durchgeführt werden. Insofern wird hinsichtlich der Merkmale wechselseitig auf den jeweils anderen Gegenstand in der Beschreibung verwiesen.

In den nebengeordneten Ansprüchen 12 bis 14 sind vorteilhafter Ausgestaltung des Unterstützungssystems beschrieben.

Weitere Einzelheiten, Merkmale, Ziele und Vorteile der vorliegenden Erfindung werden nachfolgend anhand der Zeichnung eines bevorzugten Ausführungsbeispiels näher erläutert. In der Zeichnung zeigt
- Fig. 1: eine schematische Ansicht eines vorschlagsgemäßen Verfahrens sowie eines vorschlagsgemäßen Unterstützungssystems und
- Fig. 2: eine schematische Darstellung von unterschiedlichen Messaufgaben, denen unterschiedliche Anwendungsfälle zugrunde liegen.

Das vorgeschlagene Verfahren dient der sensorgestützten Bewirtschaftung einer landwirtschaftlich genutzten Fläche 1 mittels eines mobilen Sensorsystems 2 während eines Vegetationszyklus. Das Sensorsystem 2 ist dabei erfindungsgemäß als unbemanntes Fluggerät ausgebildet und weist einen Sensorträger 3 und ein Sensormodul 4 mit einem Sensor 5 auf. Das Unterstützungssystem 6 weist eine Speichereinheit 7 und eine Planungseinheit 8 auf. Hier und vorzugsweise weist das Unterstützungssystem 6 zusätzlich eine Distributionseinheit 9 auf.

In der Speichereinheit 7 sind Anwendungsdaten 10 abgelegt und die Anwendungsdaten 10 landwirtschaftlichen Anwendungsfällen zugeordnet. Die Speichereinheit 7 kann vorzugsweise zentral oder dezentral ausgebildet sein.

Hier und vorzugsweise weist das Unterstützungssystem 6 mindestens eine Steuereinheit 11 zur, insbesondere ferngesteuerten, Steuerung des Sensorsystems 2 und/oder der Planungseinheit 8 auf.

Erfindungsgemäß wird ein landwirtschaftlicher Anwendungsfall für das mobile Sensorsystem 2 gewählt. Vorzugsweise erfolgt die Wahl des landwirtschaftlichen Anwendungsfalls durch einen Bediener, insbesondere über eine Steuereinheit 11 oder die Planungseinheit 8. Alternativ kann die Wahl des landwirtschaftlichen Anwendungsfall kann auch automatisch erfolgen.

Mittels der Planungseinheit 8 wird für den gewählten Anwendungsfall erfindungsgemäß ein Dienstdatensatz 12 für die Steuerung und/oder Konfiguration des mobilen Sensorsystems 2 zur Durchführung einer Messaufgabe erzeugt.

Hier erzeugt die Planungseinheit 8 auf der Basis der Anwendungsdaten 10, insbesondere auf der Basis von Informationen 15, 16, 17, 18 in den Anwendungsdaten 10 den Dienstdatensatz.

Ggf. kann die Planungseinheit 8 zusätzliche Informationen zur Erzeugung des Dienstdatensatzes 12 von einem Bediener und/oder einer landwirtschaftlichen Arbeitsmaschine 13 und/oder einer anderen entfernten Speichereinheit erhalten.

Insbesondere kann, vorzugsweise je nach Anwendungsfall bzw. Messaufgabe, zur Erzeugung des Dienstdatensatzes 12 noch die landwirtschaftliche Fläche 1 gewählt werden, auf der die Messaufgabe durchgeführt werden soll.

Die Planungseinheit 8 ist vorzugsweise vom Durchführungsort der Messaufgabe entfernt angeordnet. Zusätzlich oder alternativ kann die Planungseinheit 8 auch in der landwirtschaftlichen Arbeitsmaschine 13 und/oder in dem Sensorsystem 2 angeordnet sein. Vorzugsweise ist die Speichereinheit 7 bei der Planungseinheit 8 und/oder entfernt von der Planungseinheit 8 angeordnet.

Das einfache Erzeugen des Dienstdatensatzes 12 durch die Planungseinheit 8 nach der Wahl eines Anwendungsfalles ermöglicht eine einfache und leichte Bedienung des mobilen Sensorsystems 5 und damit eine einfache sensorgestützte Bewirtschaftung von landwirtschaftlichen Flächen 1.

Nachfolgend soll zunächst der Aufbau des Dienstdatensatzes 12 näher erläutert werden, bevor auf die Anwendungsdaten 10 eingegangen wird und danach Anwendungsfälle beispielhaft weiter beschrieben werden.

Der erzeugte Dienstdatensatz 12 enthält hier vom Anwendungsfall abhängige Anweisungen und/oder vom Durchführungsort für die Messaufgabe abhängige Anweisungen für das Sensorsystem 2 und eine landwirtschaftliche Arbeitsmaschine 13.

Insbesondere kann der Dienstdatensatz 12 eine Anweisung enthalten, für die Durchführung der Messaufgabe ein bestimmtes Sensormodul 4 und/oder einen bestimmten Sensor 5 eines Sensormoduls 4 und/oder eine bestimmte Sensorkombination zu verwenden.

Zusätzlich oder alternativ kann der Dienstdatensatz 12 eine Anweisung zur Sensorkalibrierung und/oder eine Anweisung, eine bestimmte Messgröße für eine Auswertung zu erfassen, enthalten.

Der Dienstdatensatz 12 kann zusätzlich oder alternativ Anweisung zur Weiterverwendung der erfassten Messgrößen enthalten, insbesondere, ob und/oder wie die erfassten Messgrößen gespeichert und/oder weitergeleitet und/oder verarbeitet werden sollen.

Zusätzlich oder alternativ weist der Dienstdatensatz 12 hier und vorzugsweise Anweisung zur Flugsteuerung des Sensorsystems 2 auf. Diese Anweisungen sind bevorzugt abhängig von der Art der Flugsteuerung. Der Dienstdatensatz 12 kann abhängig von der Art der Flugsteuerung beispielsweise eine Route enthalten, welche das Sensorsystem 2 abfliegen soll, und/oder eine Anweisung enthalten, Steuerungssignale von einer oder mehreren landwirtschaftlichen Arbeitsmaschinen 13 entgegen zu nehmen. Diese Anweisung kann beispielsweise die landwirtschaftliche Arbeitsmaschine 13 bzw. die landwirtschaftlichen Arbeitsmaschinen 13 bezeichnen, von dem die Steuersignale entgegengenommen werden sollen. Zusätzlich oder alternativ können die Anweisungen zur Flugsteuerung des Sensorsystems 2 Anweisungen enthalten, selbstständig eine bestimmte Relativposition zu der landwirtschaftlichen Arbeitsmaschine 13 zu halten.

Um die Organisation und logistische Planung des Sensorsystems 2 zu optimieren, kann der Dienstdatensatz 12 zusätzlich oder alternativ Anweisungen über Einsatzzeiten und/oder Einsatzorte zur Durchführung der Messaufgabe des Sensorsystems 2 und/oder Anweisung über Einsatzzeiten und/oder Einsatzorte für eine oder mehrere landwirtschaftliche Arbeitsmaschinen 13, insbesondere solche landwirtschaftlichen Arbeitsmaschinen 13, welche mit dem Sensorsystem 2 zur Durchführung der Messaufgabe kooperieren sollen, enthalten. Hier und vorzugsweise bezeichnet hier die Einsatzzeit die geplante Zeit der Durchführung der Messaufgabe. Ebenfalls vorzugsweise bezeichnet der Einsatzort den Durchführungsort zur Durchführung der geplanten Messaufgabe.

Zusätzlich oder alternativ kann die Planungseinheit 8 Informationen 14 zu Umgebungsbedingung, insbesondere Wetterdaten, abfragen und den Dienstdatensatz 12 in Abhängigkeit von diesen Umgebungsbedingungen erzeugen. Vorzugsweise sind die Anweisung über Einsatzzeiten und/oder Einsatzorte im erzeugten Dienstdatensatz 12 abhängig von den Informationen zu den Umgebungsbedingungen, insbesondere den Wetterdaten.

Die Anwendungsdaten 10 umfassen hier und vorzugsweise feldunspezifische Informationen 15 und/oder feldspezifische Informationen 16 und/oder maschinenspezifische Informationen 17 und/oder steuerungstechnische Informationen 18.

Darüber hinaus können die Anwendungsdaten 10, insbesondere anwendungsfallspezifische, Heuristiken für die Abfrage zusätzlicher Informationen zur Erzeugung des Dienstdatensatzes 12, insbesondere von einem Bediener und/oder einer Arbeitsmaschine 13 und/oder einer anderen entfernten Speichereinheit, zur Erzeugung des Dienstdatensatzes 12 aufweisen. Von der entfernten Speichereinheit können beispielsweise Informationen zu Umgebungsbedingungen abgefragt werden.

Vorzugsweise sind die, insbesondere ein Teil der, feldunspezifischen Informationen 15 landwirtschaftlichen Anwendungsfällen zugeordnet. Die feldunspezifischen Informationen 15 umfassen vorzugsweise Anweisungen darüber, welche Flugvorgaben für das Sensorsystem 2, gegebenenfalls in Abhängigkeit vom einzusetzenden Sensor 5 bzw. den einzusetzenden Sensoren 5, für welche Frucht und/oder zu welcher Zeit im Vegetationszyklus für welches Auswertungsziel verwendet werden. Auf diese Weise kann die Planungseinheit 8 in Abhängigkeit von Anwendungsfall und/oder Durchführungsort für die Messaufgabe bei der Erzeugung des Dienstdatensatzes 12 entsprechende Anweisung in den Dienstdatensatz 12 schreiben.

Vorzugsweise sind die, insbesondere ein Teil der, feldspezifischen Informationen 16 landwirtschaftlichen vom Anwendungsfall unabhängig. Es können auch die und/oder ein Teil der feldunspezifischen Informationen 16 landwirtschaftlichen Anwendungsfällen zugeordnet sein. Die feldspezifischen Informationen 16 können, wie hier und vorzugsweise, klassische Schlagkarteiinformationen umfassen. Hier und vorzugsweise umfassen die feldspezifischen Informationen 16 Routeninformationen für eine Arbeitsmaschine 13 und/oder Routeninformationen für das Sensorsystem 2. Die Routeninformationen für das Sensorsystem 2 können in Abhängigkeit von dem zu nutzenden Sensor 5 und/oder der Messaufgabe in den Anwendungsdaten 10 gespeichert sein.

Zusätzlich oder alternativ können die feldspezifischen Informationen 16, Informationen über Kollisionsräume umfassen, die von einer landwirtschaftlichen Arbeitsmaschine 13 und/oder dem Sensorsystem 2 zu meiden sind und/oder Informationen über Bewegungsräume für eine landwirtschaftliche Arbeitsmaschine 13 und/der das Sensorsystem 2 umfassen. Hiermit können Kollisionen der landwirtschaftlichen Arbeitsmaschine 13 und/oder des Sensorsystems 2 mit ortsfesten Hindernissen, wie beispielsweise Strommasten, vermieden werden.

Vorzugsweise sind die, insbesondere ein Teil der, maschinenspezifischen Informationen 17 landwirtschaftlichen Anwendungsfällen zugeordnet. Die maschinenspezifischen Informationen 17 sind hier und vorzugsweise Informationen für die Kopplung und Kooperation zwischen Sensorsystem 2 und landwirtschaftlicher Arbeitsmaschine 13 und/oder Informationen für die Steuerung und/oder Datenübergabe bzw. Informationsübergabe, insbesondere in Abhängigkeit von der Messaufgabe zwischen der landwirtschaftlichen Arbeitsmaschine 13 und dem Sensorsystem 2. Mittels dieser maschinenspezifischen Informationen 17 kann festgelegt werden, welche Daten ausgetauscht werden sollen und/oder welche Relativpositionen bei der Durchführung einer Messaufgabe beispielsweise von dem Sensorsystem 2 in Relation zur landwirtschaftlichen Arbeitsmaschine 13 eingenommen werden sollen. Diese Informationen lassen sich beispielsweise auch aus den Abmessungen der landwirtschaftlichen Arbeitsmaschine 13 ableiten.

Vorzugsweise sind die, insbesondere ein Teil der, steuerungstechnischen Informationen 18 landwirtschaftlichen Anwendungsfällen zugeordnet. Die steuerungstechnischen Informationen 18 umfassen hier und vorzugsweise für einen Anwendungsfall oder mehrere Anwendungsfälle Anweisungen für die Auswahl oder Bestimmung einer Route des Sensorsystems 2 für einen bestimmten Anwendungsfall.

Zusätzlich oder alternativ umfassen die steuerungstechnischen Informationen 18 für einen Anwendungsfall oder mehrere Anwendungsfälle Anweisungen für ein eigenständiges Halten einer Relativposition und/oder Anfliegen und Halten mehrerer Relativpositionen zu einer Arbeitsmaschine 13. Darüber hinaus können die steuerungstechnischen Informationen 18 zusätzlich oder alternativ Anweisungen für eine Fernsteuerung des Sensorsystems 2 durch eine Arbeitsmaschine 13 enthalten.

Ein Anwendungsfall ist vorzugsweise feldunspezifisch. Daher kann weiter vorzugsweise vor oder mit oder nach der Wahl des landwirtschaftlichen Anwendungsfalls eine landwirtschaftliche Fläche 1 als Durchführungsort für die Messaufgabe gewählt werden. In diesem Fall wird hier und vorzugsweise nach dieser Wahl von der Planungseinheit 8 der Dienstdatensatz 12 erzeugt.

Die Distributionseinheit 9 des Unterstützungssystems 6 dient zur Verteilung des Dienstdatensatzes 12. Hier und vorzugsweise überträgt die Distributionseinheit 9 den Dienstdatensatz 12 und/oder Teildienstdaten des Dienstdatensatzes 12 an das Sensorsystem 2 und/oder eine Steuereinheit 11 und/oder an eine Arbeitsmaschine 13. Alternativ kann die Distributionseinheit 9 den Dienstdatensatz 12 und/oder Teildienstdaten des Dienstdatensatzes 12 für das Sensorsystem 2 und/oder die Steuereinheit 11 und/oder eine Arbeitsmaschine 13 bereitstellen. Nachfolgend wird vereinfachend der Dienstdatensatz 12 sowohl für den Dienstdatensatz 12 als ganzes, als auch für Teildienstdaten des Dienstdatensatzes 12 verwendet. Insofern ist der Dienstdatensatz nachfolgend, sofern nicht explizit ausgeschlossen, als Dienstdatensatz 12 oder als Teildienstdaten des Dienstdatensatzes 12 zu verstehen.

Die Dispositionseinheit 9 ist vorzugsweise vom Durchführungsort entfernt und/oder in der landwirtschaftlichen Arbeitsmaschine 13 angeordnet. Sie kann bei der Speichereinheit 7 und/oder der Planungseinheit 8 angeordnet sein, oder alternativ von der Speichereinheit 7 und/oder der Planungseinheit 8 entfernt angeordnet sein.

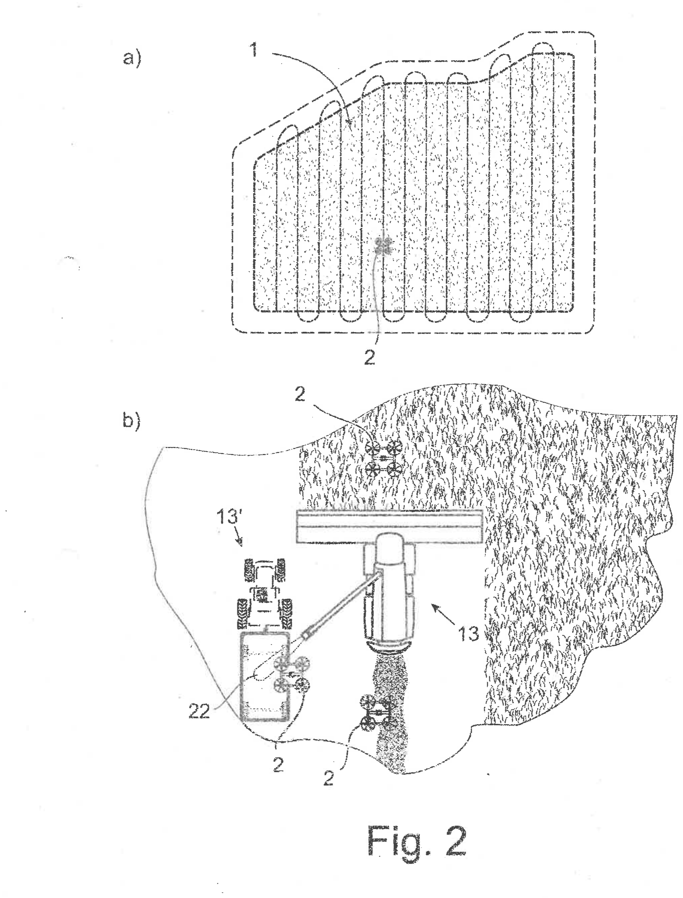

Hier und vorzugsweise führt das Sensorsystem 2 auf der Basis des Dienstdatensatzes 12 eine Messaufgabe gemäß dem gewählten landwirtschaftlichen Anwendungsfall durch und erfasst dabei Messdaten 19. In der Fig. 2 sind beispielhaft Sensorsysteme 2 bei der Durchführung verschiedener Messaufgaben für unterschiedliche Anwendungsfälle gezeigt.

In der Fig. 2a überfliegt ein Sensorsystem 2 auf der Basis eines Dienstdatensatzes 12 zur Durchführung einer Messaufgabe gemäß einem gewählten landwirtschaftlichen Anwendungsfall über die landwirtschaftlich genutzte Fläche 1. In der Fig. 2b sind drei Anwendungsfälle gezeigt. Jeder der drei Anwendungsfälle unterscheidet sich voneinander als auch von dem Anwendungsfall der Fig. 2a.

Bezüglich der möglichen Informationen 15, 16, 17, 18 der Anwendungsdaten 10 und/oder den möglichen Anweisungen in dem Dienstdatensatz 12 eines Anwendungsfalls wird auf die vorstehenden Ausführungen hierzu verwiesen.

Für die Messaufgabe der Fig. 2a wird hier und vorzugsweise von einem Bediener der Anwendungsfall gewählt, hier und vorzugsweise die Erfassung von Messdaten 19 zur Erstellung einer Feldkarte einer landwirtschaftlichen Fläche zur Bestimmung der Bestandsmasse pro Fläche. Diese dient hier und vorzugsweise der Ertragsprognose kurz vor der Ernte. Ferner wird hier und vorzugsweise der Durchführungsort, nämlich die bestimmte landwirtschaftliche Fläche 1 gewählt. Die Planungseinheit 8 erzeugt aufgrund der Informationen in den Anwendungsdaten 10 in Abhängigkeit von dem gewählten Anwendungsfall und hier und vorzugsweise aus der gewählten landwirtschaftlichen Fläche 1 einen Dienstdatensatz 12. Der Dienstdatensatz 12 enthält hier und vorzugsweise Anweisungen für das Sensorsystem 2 mit welchem Sensor 5 welche Route in welcher Höhe abgeflogen werden soll. Ferner enthält der Dienstdatensatz 12 hier und vorzugsweise Anweisungen, mit welcher Sensorkonfiguration die Messdaten 19 bei der Durchführung der Messaufgabe erfasst werden sollen und dass diese im Sensorsystem 2 zur späteren Auswertung zu speichern sind. Auf dieser Basis kann das Sensorsystem 2 hier und vorzugsweise durch die Wahl des Anwendungsfalls und die Wahl des Durchführungsortes durch einen Bediener die Messaufgabe selbsttätig durchführen. Alle weiteren notwendigen Informationen zur Erzeugung des Dienstdatensatzes 12 zum selbsttätigen Durchführen der Messaufgabe hat die Planungseinheit 8 vorzugsweise selbsttätig aus den Anwendungsdaten 10 ermittelt.

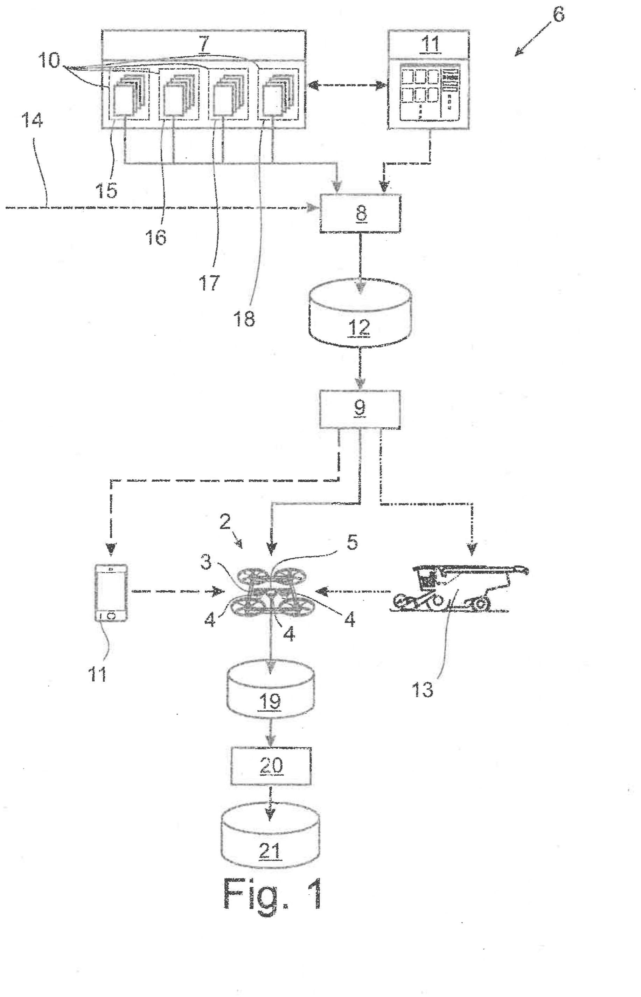

Diese Kombination an Anweisungen im Dienstdatensatz 12 ist für die von dem Sensorsystem 2 im Ausführungsbeispiel der Fig. 1a durchgeführten Messaufgabe exemplarisch. Andere von der Planungseinheit 8 erzeugte Dienstdatensätze 12 für alternative Anwendungsfälle können andere Kombinationen der zuvor beschriebenen Anweisung aufweisen.

Mittels der Planungseinheit 8 wird für einen weiteren gewählten landwirtschaftlichen Anwendungsfall, welcher sich von dem zuvor gewählten landwirtschaftlichen Anwendungsfall unterscheidet, ein Dienstdatensatz 12 für die Steuerung und/oder Konfiguration des mobilen Sensorsystems 2 erzeugt. Vorzugsweise führt das Sensorsystem 2 anschließend auf der Basis des Dienstdatensatzes 12 eine weitere Messaufgabe gemäß dem weiteren gewählten landwirtschaftlichen Anwendungsfall durch und erfasst dabei Messdaten 19. Hier und vorzugsweise wird der Dienstdatensatz 12 für den weiteren gewählten landwirtschaftlichen Anwendungsfall, wie der Dienstdatensatz 12 für den gewählten Anwendungsfall auf das Sensorsystem 2 übertragen bzw. für dieses bereitgestellt wird. Hier und vorzugsweise erfolgt dies ebenfalls über die Distributionseinheit 9.

Für die Durchführung der weiteren Messaufgabe kann ein weiterer Sensor 5 verwendet werden, der sich von dem Sensor 5 der vorherigen Messaufgabe unterscheidet, vorzugsweise, wird zur Durchführung der weiteren Messaufgabe das Sensormodul 4 des Sensorsystems 2 getauscht und/oder ein anderer Sensor des Sensormoduls verwendet. Für die Durchführung der Messaufgabe und der weiteren Messaufgabe kann sich die Anzahl der verwendeten Sensoren 5 unterscheiden. Auf diese Weise kann für die Messaufgabe jeweils die ideale Sensorkombination gewählt werden.

Zur Durchführung einer Messaufgabe kann das Sensorsystem 2 auch mehrere Sensormodule 4 tragen und/oder ein Sensormodul 4 mehrere Sensoren 5 aufweisen.

Das Sensormodul 4 kann hier und vorzugsweise und je nach Anwendungsfall als Sensor 5 eine Kamera und/oder eine Infrarotkamera und/oder einen Infrarotsensor und/oder eine Stereokamera und/oder einen Laserscanner aufweisen. Ferner kann ein Sensormodul einen Sensor zur Aufnahme von NDVI-Aufnahmen ("Normalized Differenced Vegetation Index") aufweisen.

In der Fig. 1a führt das Sensorsystem 2 eine Messaufgabe durch, welche das Erfassen von Messdaten 19 zur Erstellung einer Feldkarte der landwirtschaftlichen Fläche umfasst.

Die Messdaten 19 werden vorzugsweise zur Erkennung von kranken und/oder verunkrauteten Pflanzenbeständen pro Fläche erfasst. Zusätzlich oder alternativ können die Messdaten 19 zur Bestimmung des Bestandes pro Fläche erfasst werden. Ebenfalls zusätzlich oder alternativ können die Messdaten 19 zur Bestimmung der Bestandqualität pro Fläche erfasst werden und/oder zur Ertragsprognose pro Fläche.

Zudem können die Messdaten 19 auch zur Bestimmung der Abreife der Feldfrüchte erfasst werden. In Abhängigkeit hiervon werden hier und vorzugsweise die erfassten Messdaten 19 von einer Auswerteeinheit 20 zu Sensorinformationen 21 verarbeitet. Die Auswerteeinheit 20 steht vorzugsweise entfernt vom Durchführungsort und/oder ist in der landwirtschaftlichen Arbeitsmaschine 13 und/oder in dem Sensorsystem 2 angeordnet.

Vorzugsweise wird in Abhängigkeit von den Sensorinformationen 21 nachfolgende Arbeitsschritte der Bewirtschaftung geplant und/oder durchgeführt. Beispielsweise kann eine nachfolgende Bewässerung und/oder Düngung und/oder das Ausbringen von Pflanzenschutzmitteln auf Basis der ausgewerteten Messdaten 19 und/oder Sensorinformationen 21 erfolgen. Zusätzlich oder alternativ kann, wenn auf Basis der Messdaten 19 die Bestandsmasse und/oder Bestandsqualität pro Fläche prognostiziert wird, der Ertrag bei der Ernte prognostiziert werden. Ferner kann auf der Basis der Messdaten 19 die Erntestrategie bestimmt werden. Dies kann beispielsweise eine Routenplanung für eine landwirtschaftliche Arbeitsmaschine 13 und/oder die Bestimmung des Erntezeitpunkts sein.

Wird auf der Basis der Messdaten die Abreife der Feldfrüchte bestimmt, kann die Reihenfolge der Ernte in Abhängigkeit von Abreife durchgeführt werden.

Zusätzlich oder alternativ kann der Ertrag pro Fläche prognostiziert werden und in Abhängigkeit von der Ertragsprognose die Erntelogistik geplant werden. Die Erntelogistik kann die Anzahl an Abfahrtsfahrzeuge 13' für das Erntegut und/oder die Kapazitätsplanung der Annahme des Ernteguts und/oder die Kapazitätsplanung der Trocknung des Ernteguts umfassen.

Wie im Ausführungsbeispiel der Fig. 2b gezeigt und vorzugsweise, kann das Sensorsystem 2 zur Durchführung einer Messaufgabe mit einer landwirtschaftlichen Arbeitsmaschine 13 kooperieren. Vorzugsweise ist die landwirtschaftliche Arbeitsmaschine 13 eine Erntemaschine, weiter vorzugsweise ein Mähdrescher oder Feldhäcksler.

Der Vorteil einer Kooperation eines als unbemanntes Fluggerät ausgebildeten Sensorsystems 2 mit der Arbeitsmaschine 13 ist, das mithilfe des Sensorsystems 2 im Verhältnis zu fest an der Arbeitsmaschine 13 angebrachten Sensoren 5, die Sensorausrichtung und/oder Sensorposition für einen speziellen Anwendungsfall freier gewählt werden kann, als dies bei einem fest an der landwirtschaftlichen Arbeitsmaschine 13 angeordneten Sensor möglich ist. Der Sensor 5 kann jeweils vom Sensorsystem 2 in die für die Messaufgabe bevorzugte Relativposition zur Arbeitsmaschine 13 bewegt werden. Ein weiterer Vorteil der Erfassung von Messgrößen mit dem mobilen Sensorsystem 2 ist, dass dieses in der Luft schwebt und die Sensoren 5 damit den Vibrationen der landwirtschaftlichen Arbeitsmaschine 13 nicht ausgesetzt sind. Daher müssen Vibrationen der Arbeitsmaschine 13 nicht aufwendig aus den Messdaten herausgefiltert werden. Insofern sind Messergebnisse mit einer besseren Qualität möglich.

Hier und vorzugsweise ist die Messaufgabe die Erfassung von Messdaten 19 zur Umfelderkennung, insbesondere zur Vorfelderkennung vor der landwirtschaftlichen Arbeitsmaschine 13 und/oder Rückschauerkennung hinter der landwirtschaftlichen Arbeitsmaschine 13 und/oder die Erfassung von Messdaten 19 zur Übergabe von Erntegut 22, von einer landwirtschaftlichen Arbeitsmaschine 13 an eine andere landwirtschaftliche Arbeitsmaschine 13'. Diese drei Messaufgaben, nämlich "Vorfelderkennung", "Rückschauerkennung" und "Übergabe von Erntegut" sind in der Zeichnung der Fig. 2b dargestellt.

Gemäß einer bevorzugten Weiterbildung der Erfindung werden die erfassten Messdaten und/oder verarbeiteten Sensorinformationen an die kooperierende landwirtschaftliche Arbeitsmaschine 13 übergeben. Vorzugsweise nutzt die landwirtschaftliche Arbeitsmaschine 13 die erfassten Messdaten 19 und/oder verarbeiteten Sensorinformationen nach Art einer Umfelderkennung. Dies kann insbesondere eine Art Vorfelderkennung und/oder Rückschauerkennung sein.

Hier und vorzugsweise wird mindestens ein Betriebsparameter, insbesondere die Fahrgeschwindigkeit, der landwirtschaftlichen Arbeitsmaschine 13 anhand der erfassten Messdaten 19 und/oder verarbeiteten Sensorinformationen 21 eingestellt. Bei der Vorfelderkennung sind dies vorzugsweise Betriebsparameter, mit denen die Erntegutverarbeitung in der Arbeitsmaschine 13 optimiert wird. Bei der Rückschauerkennung kann beispielsweise ein Betriebsparameter der Erntemaschine so verändert werden, dass die Strohverteilung hinter der Erntemaschine optimiert wird.

Für die Messaufgabe "Vorfelderkennung" wird hier und vorzugsweise von einem Bediener dieser Anwendungsfall gewählt. In diesem Fall und vorzugsweise erfolgt diese Wahl durch den Bediener der landwirtschaftlichen Arbeitsmaschine 13 über eine in der Arbeitsmaschine angeordnete Steuereinheit 11. Die Planungseinheit 8 erzeugt aufgrund der Informationen 15, 16, 17, 18 in den Anwendungsdaten 10 in Abhängigkeit von dem gewählten Anwendungsfall "Vorfelderkennung" hier und vorzugsweise einen Dienstdatensatz 12. Der Dienstdatensatz 12 enthält hier und vorzugsweise Anweisungen mit der landwirtschaftlichen Arbeitsmaschine 13 zu kooperieren und Steuerbefehle von der landwirtschaftlichen Arbeitsmaschine 13 entgegenzunehmen und auszuführen. Ferner enthält der Dienstdatensatz 12 hier und vorzugsweise Anweisungen, mit welchem Sensor 5 und welcher Sensorkonfiguration die Messdaten 19 bei der Durchführung der Messaufgabe erfasst werden sollen und dass und wie diese an die landwirtschaftliche Arbeitsmaschine 13 zu übergeben sind.

Darüber hinaus enthält der Dienstdatensatz 12 hier und vorzugsweise Anweisungen für die landwirtschaftliche Arbeitsmaschine 13, wie das Sensorsystem 2 zu steuern ist. Eine Auswerteeinheit 20 in der landwirtschaftlichen Arbeitsmaschine 13 verarbeitet die vom Sensorsystem 2 empfangenen Messdaten 19, insbesondere kontinuierlich, zu Sensorinformationen 21. Hier und vorzugsweise wird dann, insbesondere ebenfalls kontinuierlich, ein Betriebsparameter der landwirtschaftlichen Arbeitsmaschine 13 anhand der Sensorinformationen 21 eingestellt. Dies erfolgt vorzugsweise selbsttätig, so dass der Bediener der landwirtschaftlichen Arbeitsmaschine 13 lediglich den Anwendungsfall wählen muss.

Zusätzlich oder alternativ ist eine weitere Messaufgabe "Vorfelderkennung" möglich, bei welcher das Sensorsystem die Messaufgabe eigenständig durchführt und die landwirtschaftliche Fläche abfliegt und die erfassten Daten 19 und/oder Sensorinformationen 21 im Anschluss der Arbeitsmaschine übergeben und/oder bereitgestellt werden. Dies kann die erfassten Daten 19 und/oder Sensorinformationen 21 auch dann zur Vorfelderkennung nutzen.

Für die Messaufgabe "Rückschauerkennung" wird hier und vorzugsweise von einem Bediener dieser Anwendungsfall gewählt. In diesem Fall und vorzugsweise erfolgt diese Wahl durch den Bediener der landwirtschaftlichen Arbeitsmaschine 13 über eine in der Arbeitsmaschine 13 angeordnete Steuereinheit 11. Die Planungseinheit 8 erzeugt aufgrund der Informationen 15, 16, 17, 18 in den Anwendungsdaten 10 in Abhängigkeit von dem gewählten Anwendungsfall "Rückschauerkennung" hier und vorzugsweise einen Dienstdatensatz 12. Der Dienstdatensatz 12 enthält hier und vorzugsweise Anweisungen mit der landwirtschaftlichen Arbeitsmaschine 13 zu kooperieren und selbsttätig eine vorgegebene Relativposition zu der landwirtschaftlichen Arbeitsmaschine 13 zu halten. Ferner enthält der Dienstdatensatz 12 hier und vorzugsweise Anweisungen, mit welchem Sensor 5 die Messdaten 19 bei der Durchführung der Messaufgabe erfasst werden sollen und dass diese an die landwirtschaftliche Arbeitsmaschine 13 zu übergeben sind. Hier und vorzugsweise ist der Sensor 5 ein Infrarotsensor.

Die Auswerteeinheit 20 verarbeitete vorzugsweise die Messdaten 19 zu Sensorinformationen 21 und zeigt diese dem Bediener an. Bei den Sensorinformationen 21 kann es sich beispielsweise um die Verteilung der Strohdicke hinter der Erntemaschine handeln. Der Bediener regelt hier und vorzugsweise manuell Betriebsparameter der landwirtschaftlichen Arbeitsmaschine 13 auf der Basis der angezeigten Sensorinformationen 21.

Für die Messaufgabe "Übergabe von Erntegut" wird hier und vorzugsweise von einem Bediener dieser Anwendungsfall gewählt. In diesem Fall und vorzugsweise erfolgt diese Wahl durch den Bediener der landwirtschaftlichen Arbeitsmaschine 13 über eine in der Arbeitsmaschine 13 angeordnete Steuereinheit 11. Die Planungseinheit 10 erzeugt aufgrund der Informationen 15, 16, 17, 18 in den Anwendungsdaten 10 in Abhängigkeit von dem gewählten Anwendungsfall "Rückschauerkennung" hier und vorzugsweise einen Dienstdatensatz 12. Der Dienstdatensatz 12 enthält hier und vorzugsweise Anweisungen mit der landwirtschaftlichen Arbeitsmaschine 13 zu kooperieren und selbsttätig eine vorgegebene Relativposition zu der landwirtschaftlichen Arbeitsmaschine 13 zu halten. Ferner enthält der Dienstdatensatz 12 hier und vorzugsweise Anweisungen, mit welchem Sensor 5 die Messdaten 19 bei der Durchführung der Messaufgabe erfasst werden sollen und dass diese an die landwirtschaftliche Arbeitsmaschine 13 zu übergeben sind.

Die Auswerteeinheit 20 verarbeitete vorzugsweise die Messdaten zu Sensorinformationen und regelt auf der Basis der Sensorinformationen die Übergabe des Ernteguts 22 von der landwirtschaftlichen Arbeitsmaschine 13 zu der landwirtschaftlichen Arbeitsmaschine 13' selbsttätig, indem er letztere den Betriebsparameter Fahrgeschwindigkeit vorgibt.

Diese Kombinationen an Anweisungen im Dienstdatensatz 12 sind für die von dem Sensorsystem im Ausführungsbeispiel der Fig. 1b durchgeführten Messaufgaben exemplarisch. Andere von der Planungseinheit 8 erzeugte Dienstdatensätze 12 für alternative Anwendungsfälle können andere Kombinationen der am Anfang der Figurenbeschreibung beschriebenen Anweisung aufweisen.

Hier und vorzugsweise kann eine Messaufgabe, insbesondere in Kooperation des Sensorsystems 2 mit einer landwirtschaftlichen Arbeitsmaschine 13, wie zuvor beschrieben einfach durch Auswählen eines Anwendungsfalles von der Planungseinheit 8 ein neuer Dienstdatensatz 12 erzeugt werden. Es ist einem Bediener oder automatisiert auf einfache Art und Weise möglich, mit dem Sensorsystem je nach Bedarf eine andere Messaufgabe durchzuführen oder die Messaufgabe während einer anderen zu Wechseln. Ein aufwendiges manuelles Steuern und/oder Einstellen des Sensorsystems und/oder einer Relativposition des Sensorsystems 2 zu einer landwirtschaftlichen Arbeitsmaschine 13 entfällt vorzugsweise.

### Bezugszeichenliste

- 1: Landwirtschaftlich genutzte Fläche
- 2: Mobiles Sensorsystem
- 3: Sensorträger
- 4: Sensormodul
- 5: Sensor
- 6: Unterstützungssystem
- 7: Speichereinheit
- 8: Planungseinheit
- 9: Distributionseinheit
- 10: Anwendungsdaten
- 11: Steuereinheit
- 12: Dienstdatensatz
- 13: Arbeitsmaschine
- 13': Arbeitsmaschine
- 14: Informationen zu Umgebungsbedingungen
- 15: feldunspezifische Informationen
- 16: feldspezifische Informationen
- 17: maschinenspezifische Informationen
- 18: steuerungstechnische Informationen
- 19: Messdaten
- 20: Auswerteeinheit
- 21: Sensorinformationen
- 22: Erntegut

## Patentansprüche

1. Verfahren zur sensorgestützten Bewirtschaftung einer landwirtschaftlich genutzten Fläche (1) mittels eines mobilen Sensorsystems (2) während eines Vegetationszyklus, wobei das Sensorsystem (2) als unbemanntes Fluggerät ausgebildet ist und einen Sensorträger (3) und ein Sensormodul (4) mit mindestens einem Sensor (5) aufweist, wobei in einer Speichereinheit (7) Anwendungsdaten (10) abgelegt und die Anwendungsdaten (10) landwirtschaftlichen Anwendungsfällen zugeordnet sind, wobei ein landwirtschaftlicher Anwendungsfall für das mobile Sensorsystem (2) gewählt wird und mittels einer Planungseinheit (8) auf der Basis von Informationen aus den Anwendungsdaten für den gewählten Anwendungsfall ein Dienstdatensatz (12) für die Steuerung und/oder Konfiguration des mobilen Sensorsystems (2) zur Durchführung einer Messaufgabe erzeugt wird,
**dadurch gekennzeichnet, dass**
ein Dienstdatensatz (12) vom Anwendungsfall abhängige Anweisungen und/oder vom Durchführungsort für die Messaufgabe abhängige Anweisungen für das Sensorsystem (2) und eine landwirtschaftliche Arbeitsmaschine (13) enthält.

2. Verfahren nach Anspruch 1, **dadurch gekennzeichnet, dass** die Anwendungsdaten (10) feldunspezifische Informationen (15) und/oder feldspezifische Informationen (16) und/oder arbeitsmaschinenspezifische Informationen (17) und/oder steuerungstechnische Informationen (18) umfassen.

3. Verfahren nach einem der vorhergehenden Ansprüche, **dadurch gekennzeichnet, dass** eine Distributionseinheit (9) den Dienstdatensatz (12) und/oder Teildienstdaten des Dienstdatensatzes (12) an das Sensorsystem (2) und/oder an eine Steuereinheit (11) und/oder an eine Arbeitsmaschine (13) überträgt, und/oder, dass die Distributionseinheit (9) den Dienstdatensatz (12) und/oder Teildienstdaten des Dienstdatensatzes (12) für das Sensorsystem (2) und/oder eine Steuereinheit (11) und/oder eine Arbeitsmaschine (13) bereitstellt.

4. Verfahren nach einem der vorhergehenden Ansprüche, **dadurch gekennzeichnet, dass** das Sensorsystem (2) auf der Basis des Dienstdatensatzes (12) eine Messaufgabe gemäß dem gewählten landwirtschaftlichen Anwendungsfall durchführt.

5. Verfahren nach einem der vorhergehenden Ansprüche, **dadurch gekennzeichnet, dass** mittels der Planungseinheit (8) für einen weiteren gewählten landwirtschaftlichen Anwendungsfall, welcher sich von dem zuvor gewählten landwirtschaftlichen Anwendungsfall unterscheidet, ein Dienstdatensatz (12) für die Steuerung und/oder Konfiguration des mobilen Sensorsystems (2) erzeugt wird, vorzugsweise, dass das Sensorsystem (2) auf der Basis des Dienstdatensatzes (12) eine weitere Messaufgabe gemäß dem weiteren gewählten landwirtschaftlichen Anwendungsfall durchführt.

6. Verfahren nach Anspruch 5, **dadurch gekennzeichnet, dass** zur Durchführung der weiteren Messaufgabe ein weiterer Sensor (5) verwendet wird als für die vorherige Messaufgabe, vorzugsweise, dass zur Durchführung der weiteren Messaufgabe das Sensormodul (4) des Sensorsystems getauscht wird und/oder ein anderer Sensor des Sensormoduls verwendet.

7. Verfahren nach einem der vorhergehenden Ansprüche, **dadurch gekennzeichnet, dass** eine Messaufgabe das Erfassen von Messdaten (19) zur Erstellung einer Feldkarte der landwirtschaftlichen Fläche (1) umfasst, insbesondere,
- dass Messdaten (19) zur Erkennung von kranken und/oder verunkrauteten Pflanzenbeständen pro Fläche erfasst werden, und/oder,
- dass Messdaten (19) zur Bestimmung der Bestandsmasse pro Fläche erfasst werden, und/oder,
- dass Messdaten (19) zur Bestimmung der Bestandsqualität pro Fläche erfasst werden
- dass Messdaten (19) zur Ertragsprognose pro Fläche erfasst werden und/oder
- Messdaten (19) zur Bestimmung der Abreife der Feldfrüchte erfasst werden.

8. Verfahren nach einem der vorhergehenden Ansprüche, **dadurch gekennzeichnet, dass** eine Auswerteeinheit (20) die erfassten Messdaten (19) zu Sensorinformationen (21) verarbeitet, vorzugsweise, dass nachfolgende Arbeitsschritte der Bewirtschaftung in Abhängigkeit von den Sensorinformationen (21) geplant und/oder durchgeführt werden.

9. Verfahren nach einem der vorhergehenden Ansprüche, **dadurch gekennzeichnet, dass** das Sensorsystem (2) zur Durchführung einer Messaufgabe mit einer landwirtschaftlichen Arbeitsmaschine (13) kooperiert, vorzugsweise, dass die Messaufgabe ist
- die Erfassung von Messdaten (19) zur Umfelderkennung, insbesondere zur Vorfelderkennung vor der landwirtschaftlichen Arbeitsmaschine (13) und/oder Rückschauerkennung hinter der landwirtschaftlichen Arbeitsmaschine (13) und/oder
- die Erfassung von Messdaten (19) zur Übergabe von Erntegut von einer landwirtschaftlichen Arbeitsmaschine (13) an eine andere landwirtschaftliche Arbeitsmaschine (13).

10. Verfahren nach einem der vorhergehenden Ansprüche, **dadurch gekennzeichnet, dass** die erfassten Messdaten (19) und/oder verarbeiteten Sensorinformationen (21) an die kooperierende landwirtschaftliche Arbeitsmaschine (13) übergeben werden, vorzugsweise dass die landwirtschaftliche Arbeitsmaschine (13) die erfassten Messdaten (19) und/oder verarbeiteten Sensorinformationen (21) nach Art einer Umfelderkennung, insbesondere Vorfelderkennung und/oder Rückschauerkennung, nutzt, weiter vorzugsweise, dass mindestens ein Betriebsparameter, insbesondere die Fahrgeschwindigkeit, der landwirtschaftlichen Arbeitsmaschine (13) anhand der erfassten Messdaten (19) und/oder verarbeiteten Sensorinformationen (21) eingestellt wird bzw. werden.

11. Unterstützungssystem zur sensorgestützten Bewirtschaftung einer landwirtschaftlich genutzten Fläche (1) während eines Vegetationszyklus, zur Durchführung eines Verfahrens nach einem der vorhergehenden Ansprüche,mit einem mobilen Sensorsystems (2), welches als unbemanntes Fluggerät ausgebildet ist und einen Sensorträger (3) und ein Sensormodul (4) mit einem Sensor aufweist, **dadurch gekennzeichnet, dass** das Unterstützungssystem eine Speichereinheit (7) umfasst, in der Anwendungsdaten (10) und die Zuordnung der Anwendungsdaten (10) zu landwirtschaftlichen Anwendungsfällen gespeichert sind,mit einer Planungseinheit (8), die dazu ausgebildet und eingerichtet ist, aus den Anwendungsdaten (10) in Abhängigkeit von einem gewählten landwirtschaftlichen Anwendungsfall einen Dienstdatensatz (12) für das Betreiben des mobilen Sensorsystems (2) zu erzeugen.

12. Unterstützungssystem nach Anspruch 11, **dadurch gekennzeichnet, dass** die Planungseinheit (8) entfernt vom Durchführungsort steht und/oder in der landwirtschaftlichen Arbeitsmaschine (13) und/oder in dem Sensorsystem (2) angeordnet ist.

13. Unterstützungssystem nach Anspruch 11 oder 12, **dadurch gekennzeichnet, dass** die Auswerteeinheit (20) entfernt vom Durchführungsort steht und/oder in der landwirtschaftlichen Arbeitsmaschine (13) und/oder **in** dem Sensorsystem (2) angeordnet ist.

14. Unterstützungssystem nach einem Ansprüche 11 bis 13, **dadurch gekennzeichnet, dass** das Unterstützungssystem (6) mindestens eine Steuereinheit (11) zur, insbesondere ferngesteuerten, Steuerung des Sensorsystems (2) und/oder der Planungseinheit (8) aufweist.

## Claims

1. A method for the sensor-supported management of an area (1) for agricultural use by means of a mobile sensor system (2) during a vegetation cycle, wherein the sensor system (2) is configured as an unmanned aircraft and has a sensor carrier (3) and a sensor module (4) with at least one sensor (5), wherein application data (10) are stored in a storage unit (7) and the application data (10) are allocated to agricultural applications, wherein an agricultural application is selected for the mobile sensor system (2), and a service data set (12) for the control and/or configuration of the mobile sensor system (2) is produced for the selected application by means of a planning unit (8) on the basis of information from the application data in order to carry out a measurement task,
**characterized in that**
a service data set (12) contains instructions for the sensor system (2) and an agricultural working machine (13) which are dependent on the application and/or which are dependent on the site of operations for carrying out the measurement task.

2. The method according to claim 1, **characterized in that** the application data (10) comprise non-field-specific information (15) and/or field-specific information (16) and/or working machine-specific information (17) and/or control engineering information (18).

3. The method according to one of the preceding claims, **characterized in that** a distribution unit (9) transmits the service data set (12) and/or partial service data of the service data set (12) to the sensor system (2) and/or to a control unit (11) and/or to a working machine (13), and/or **in that** the distribution unit (9) provides the service data set (12) and/or partial service data of the service data set (12) for the sensor system (2) and/or a control device (11) and/or a working machine (13).

4. The method according to one of the preceding claims, **characterized in that**, on the basis of the service data set (12), the sensor system (2) carries out a measurement task in accordance with the selected agricultural application.

5. The method according to one of the preceding claims, **characterized in that** a service data set (12) is produced by means of the planning unit (8) for the control and/or configuration of the mobile sensor system (2) for a further selected agricultural application which is different from the previously selected agricultural application, preferably **in that** the sensor system (2) carries out a further measurement task in accordance with the further selected agricultural application on the basis of the service data set (12).

6. The method according to claim 5, **characterized in that** in order to carry out the further measurement task, a different sensor (5) from that employed for the previous measurement task is used, preferably **in that**, in order to carry out the further measurement task, the sensor module (4) of the sensor system is exchanged and/or another sensor of the sensor module is used.

7. The method according to one of the preceding claims, **characterized in that** a measurement task comprises measuring measurement data (19) in order to generate a field map of the agricultural area (1), in particular
- **in that** measurement data (19) are measured in order to detect the plant crop per unit area which is unhealthy and/or overgrown with weeds, and/or
- **in that** measurement data (19) are measured in order to determine the crop weight per unit area, and/or
- **in that** measurement data (19) are measured in order to determine the quality of the crop per unit area,
- **in that** measurement data (19) are measured in order to forecast the yield per unit area, and/or
- measurement data (19) are measured in order to determine the ripening of the field fruit.

8. The method according to one of the preceding claims, **characterized in that** an evaluation unit (20) processes the measured measurement data (19) into sensor information (21), preferably **in that** subsequent working steps of the management are planned and/or carried out as a function of the sensor information (21).

9. The method according to one of the preceding claims, **characterized in that** the sensor system (2) cooperates with an agricultural working machine (13) in order to carry out a measurement task, preferably **in that** the measurement task is:
- the measurement of measurement data (19) for environmental sensing, in particular in order to sense the field in front of the agricultural working machine (13) and/or for sensing to the rear of the agricultural working machine (13), and/or
- the measurement of measurement data (19) for the transfer of harvested material from one agricultural working machine (13) to another agricultural working machine (13).

10. The method according to one of the preceding claims, **characterized in that** the measured measurement data (19) and/or processed sensor information (21) is transmitted to the cooperating agricultural working machine (13), preferably **in that** the agricultural working machine (13) uses the measured measurement data (19) and/or processed sensor information (21) in the manner of a type of environmental sensing, in particular frontal sensing and/or rearward sensing, more preferably **in that** at least one operating parameter, in particular the speed of travel, of the agricultural working machine (13) is/are adjusted with the aid of the measured measurement data (19) and/or processed sensor information (21).

11. A support system for the sensor-supported management of an area (1) for agricultural use during a vegetation cycle, for carrying out a method according to one of the preceding claims, with a mobile sensor system (2) which is configured as an unmanned aircraft, and a sensor carrier (3) and a sensor module (4) with a sensor, **characterized in that** the support system comprises a storage unit (7) in which application data (10) and the allocation of the application data (10) to agricultural applications are stored, with a planning unit (8) which is configured and equipped to produce a service data set (12) for the operation of the mobile sensor system (2) from the application data (10) as a function of a selected agricultural application.

12. The support system according to claim 11, **characterized in that** the planning unit (8) is remote from the site of operations and/or is disposed in the agricultural working machine (13) and/or in the sensor system (2).

13. The support system according to claim 11 or claim 12, **characterized in that** the evaluation unit (20) is remote from the site of operations and/or is disposed in the agricultural working machine (13) and/or in the sensor system (2).

14. The support system according to one of claims 11 to 13, **characterized in that** the support system (6) has at least one control unit (11) for controlling the sensor system and/or the planning unit (8), in particular by remote control.

## Revendications

1. Procédé de gestion assistée par capteurs d'une surface à usage agricole (1) au moyen d'un système de capteurs mobile (2) pendant un cycle de végétation, le système de capteurs (2) étant conformé en engin volant non habité et comportant un porte-capteurs (3) et un module de capteurs (4) avec au moins un capteur (5), des données applicatives (10) étant enregistrées dans une unité de mémoire (7), et les données applicatives (10) étant associées à des cas d'application agricole, un cas d'application agricole étant sélectionné pour le système de capteurs mobile (2), et, au moyen d'une unité de planification (8), un ensemble de données de service (12) étant généré pour le cas d'application sélectionné, sur la base d'informations provenant des données applicatives, pour commander et/ou configurer le système de capteurs mobile (2) afin d'accomplir une tâche de mesure,
**caractérisé en ce que**
un ensemble de données de service (12) inclut, pour le système de capteurs (2) et pour une machine de travail agricole (13), des instructions dépendant du cas d'application et/ou des instructions dépendant du lieu d'accomplissement de la tâche de mesure.

2. Procédé selon la revendication 1, **caractérisé en ce que** les données applicatives (10) incluent des informations non spécifiques au champ (15) et/ou des informations spécifiques au champ (16) et/ou des informations spécifiques à la machine de travail (17) et/ou des informations de technique de commande (18).

3. Procédé selon une des revendications précédentes, **caractérisé en ce qu'**une unité de distribution (9) transfère l'ensemble de données de service (12) et/ou des données de service partielles de l'ensemble de données de service (12) au système de capteurs (2) et/ou à une unité de commande (11) et/ou à une machine de travail (13), et/ou **en ce que** l'unité de distribution (9) fournit l'ensemble de données de service (12) et/ou des données de service partielles de l'ensemble de données de service (2) pour le système de capteurs (2) et/ou pour une unité de commande (11) et/ou pour une machine de travail (13).

4. Procédé selon une des revendications précédentes, **caractérisé en ce que**, sur la base de l'ensemble de données de service (12), le système de capteurs (2) réalise une tâche de mesure selon le cas d'application agricole sélectionné.

5. Procédé selon une des revendications précédentes, **caractérisé en ce qu'**au moyen de l'unité de planification (8), pour un autre cas d'application agricole sélectionné qui se différencie du cas d'application agricole sélectionné antérieurement, un ensemble de données de service (12) est généré pour commander et/ou configurer le système de capteurs mobile (2), de préférence **en ce que** le système de capteurs (2) accomplit, sur la base de l'ensemble de données de service (12), une autre tâche de mesure selon l'autre cas d'application agricole sélectionné.

6. Procédé selon la revendication 5, **caractérisé en ce que**, pour accomplir l'autre tâche de mesure, un capteur (5) autre que pour la tâche de mesure antérieure est employé, de préférence **en ce que**, pour accomplir l'autre tâche de mesure, le module de capteurs (4) du système de capteurs est échangé et/ou un autre capteur du module de capteurs est employé.

7. Procédé selon une des revendications précédentes, **caractérisé en ce qu'**une tâche de mesure inclut l'acquisition de données de mesure (19) pour établir une carte de champ de la surface agricole (1), en particulier,
- **en ce que** des données de mesure (19) sont acquises pour détecter des cultures végétales malades et/ou envahies par les mauvaises herbes par surface, et/ou
- **en ce que** des données de mesure (19) sont acquises pour déterminer la masse de culture par surface, et/ou
- **en ce que** des données de mesure (19) sont acquises pour déterminer la qualité de culture par surface
- **en ce que** des données de mesure (19) sont acquises en vue d'un pronostic de rendement par surface et/ou
- des données de mesure (19) sont acquises pour déterminer la maturité de la récolte en champ.

8. Procédé selon une des revendications précédentes, **caractérisé en ce qu'**une unité d'analyse (20) transforme les données de mesure acquises (19) en informations de capteurs (21), de préférence **en ce que** des étapes de travail ultérieures de la gestion sont planifiées et/ou exécutées en fonction des informations de capteurs (21).

9. Procédé selon une des revendications précédentes, **caractérisé en ce que**, pour accomplir une tâche de mesure, le système de capteurs (2) coopère avec une machine de travail agricole (13), de préférence **en ce que** la tâche de mesure est
- l'acquisition de données de mesure (19) pour la reconnaissance d'environnement, en particulier pour la reconnaissance de la zone d'approche devant la machine de travail agricole (13) et/ou la reconnaissance rétrospective derrière la machine de travail agricole (13) et/ou
- l'acquisition de données de mesure (19) pour transférer du produit récolté d'une machine de travail agricole (13) à une autre machine de travail agricole (13).

10. Procédé selon une des revendications précédentes, **caractérisé en ce que** les données de mesure acquises (19) et/ou les informations de capteurs traitées (21) sont transmises à la machine de travail agricole coopérante (13), de préférence **en ce que** la machine de travail agricole (13) utilise les données de mesure acquises (19) et/ou les informations de capteurs traitées (21) à la façon d'une reconnaissance d'environnement, en particulier reconnaissance de zone d'approche et/ou reconnaissance rétrospective, plus préférentiellement **en ce qu'**au moins un paramètre d'exploitation, en particulier la vitesse de marche, de la machine de travail agricole (13) est réglé à l'aide des données de mesure acquises (19) et/ou des informations de capteurs traitées (21).

11. Système d'assistance pour la gestion assistée par capteurs d'une surface à usage agricole (1) pendant un cycle de végétation, pour mettre en œuvre un procédé selon une des revendications précédentes, comprenant un système de capteurs mobile (2) qui est conformé en engin volant non habité et comporte un porte-capteurs (3) et un module de capteurs (4) avec un capteur, **caractérisé en ce que** le système d'assistance inclut une unité de mémoire (7) dans laquelle sont mémorisées des données applicatives (10) et l'association des données applicatives (10) à des cas d'application agricole, comprenant une unité de planification (8) qui est conçue et agencée pour générer, à partir des données applicatives (10), en fonction d'un cas d'application agricole sélectionné, un ensemble de données de service (12) pour exploiter le système de capteurs mobile (2).

12. Système d'assistance selon la revendication 11, **caractérisé en ce que** l'unité de planification (8) est distante du lieu d'accomplissement et/ou est disposée dans la machine de travail agricole (13) et/ou dans le système de capteurs (2).

13. Système d'assistance selon la revendication 11 ou 12, **caractérisé en ce que** l'unité d'analyse (20) est distante du lieu d'accomplissement et/ou est disposée dans la machine de travail agricole (13) et/ou dans le système de capteurs (2).

14. Système d'assistance selon une des revendications 11 à 13, **caractérisé en ce que** le système d'assistance (6) comporte au moins une unité de commande (11) pour la commande, en particulier télécommandée, du système de capteurs (2) et/ou de l'unité de planification (8).
